# EUROPEAN PATENT APPLICATION

(11) **EP 2 100 931 A1**
(43) Date of publication of application: **16.09.2009**
(21) Application number: 09154634.1
(22) Date of filing: 09.03.2009
(51) Int. Cl.: C09D 133/14, C08K 5/22, G01N 33/543

(54) **Coating agent for preventing nonspecific adsorption**

(30) Priority: 11.03.2008 JP 2008061118
(71) Applicant: JSR Corporation, Tokyo 105-8640 (JP)
(72) Inventor: Ogawa, Toshihiro, Minato-ku Tokyo 105-8640 (JP); Tamori, Kouji, Minato-ku Tokyo 105-8640 (JP)
(74) Representative: TBK-Patent

(57) **Abstract**

A coating agent to prevent nonspecific adsorption of a substance, which comprises a water-soluble copolymer (P) comprising
a repeating unit (A) represented by the following formula (1): 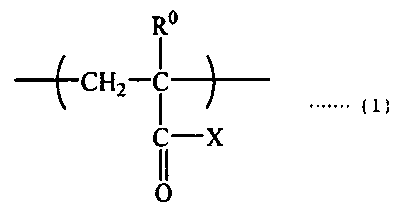 wherein R⁰ represents a hydrogen atom or a methyl group and X represents a group represented by the following formula (1a): 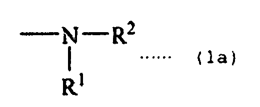 wherein R¹ and R² independently represent a hydrogen atom or unsubstituted or substituted an alkyl group having from 1 to 8 carbon atoms or formula (1b): 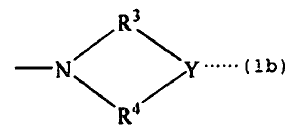 wherein R³ and R⁴ independently represent a single bond, substituted or unsubstituted methylene or substituted or unsubstituted divalent alkylene group having from 2 to 7 carbon atoms wherein total of the number of carbon atoms of R³ and R⁴ is from 4 to 10, and Y represents any one of a single bond, O and S;
a repeating unit (B) represented by the following formula (2): 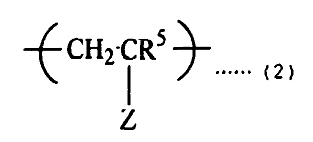 wherein R⁵ represents a hydrogen atom or a methyl group and Z represents an organic group containing at least one aldo group or keto group; and
a hydrazide compound (H) comprising at least two hydrazino groups per one molecule.

## Description

### BACKGROUND OF THE INVENTION

### 1. Field of the Invention

The present invention relates to a coating agent for preventing nonspecific adsorption, which inhibits nonspecific adsorption of a substance relating to a living body such as various species of proteins and the like to, for example, parts, tools, containers and the like which are used in clinical diagnoses, biochemical experiments and the like, and which also has high durability.

### 2. Brief Description of the Background Art

In recent years, high sensitivity tests are needed for the purpose of early stage detection of diseases and the like, and improvement of the sensitivity of diagnostic agents is a serious problem. Also in the case of a diagnostic agent which uses a polystyrene plate, magnetic particle or the like, for the purpose of improving sensitivity, the detection method is changing from the method which uses an enzymatic color development to a method which uses fluorescence or chemiluminescence from which more high sensitivity can be obtained. However, sufficient sensitivity has not been obtained in reality. A cause of this is that, in the case of a diagnosis in which a specific substance is detected in the coexistence of living body molecules such as serum and the like, the coexisting living body molecules, secondary antibody, emission substrate and the like adhere nonspecifically to tools, containers and the like. As a result, noises are increased to obstruct improvement of sensitivity. Accordingly, in the case of the diagnostic immunoassay, in order to reduce the lowering of sensitivity caused by the nonspecific adsorption of these substances to tools and containers, the noises are reduced generally by inhibiting the nonspecific adsorption through the use of organism-derived substances such as albumin, casein, gelatin and the like as additive agents. However, even when these additive agents are used, the nonspecific adsorption still remains. Furthermore, when a living body-derived additive agent is used, there is a problem of organism pollution typified by BSE. Additionally, the effect to prevent nonspecific adsorption by these additive agents is easily lowered by washing with acid or alkali, surfactant aqueous solution and the like, and shows inferior durability.

As examples of the coating agent by chemically synthesized polymers prepared with the aim of preventing nonspecific adsorption, although polymers having polyoxyethylene have been proposed in JP-A-5-103831, JP-A-2006-177914 and JP-A-2006-299045, and copolymers having a phosphorylcholine group in JP-A-2006-176720 and JP-A-2006-258585, their nonspecific adsorption preventive effect was insufficient.

### SUMMARY OF THE INVENTION

The present invention provides a coating agent for preventing nonspecific adsorption, which inhibits nonspecific adsorption of a substance relating to a living body such as a protein or the like, to parts, tools, containers and the like which are used in clinical examinations, biochemical experiments and the like (e.g., diagnostic chemiluminescence immunoassay), and which also has high durability. In this connection, according to the present invention, the substance relating to a living body means lipid, protein, saccharides or nucleic acids.

### DETAILED DESCRIPTION OF THE INVENTION

With the aim of solving the problems, the inventors of the present invention have found that a coating agent which has both of the high nonspecific adsorption preventive effect on a substance relating to a living body and the durability can be obtained by synthesizing a copolymer of a specific composition using a specific crosslinking agent to accomplish the present invention.

The coating agent for preventing nonspecific adsorption of a substance relating to a living body according to an embodiment of the present invention comprises a water-soluble copolymer (P) comprising
a repeating unit (A) represented by the following formula (1): 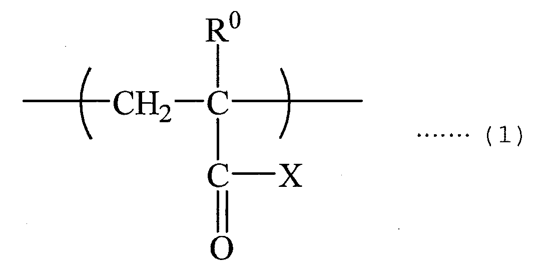 wherein R⁰ represents a hydrogen atom or a methyl group and
X represents a group represented by the following formula (1a): 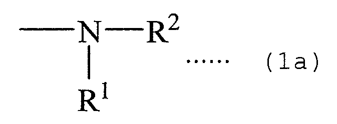 wherein R¹ and R² independently represent a hydrogen atom, an alkyl group having from 1 to 8 carbon atoms or an alkyl group having from 1 to 8 carbon atoms which is substituted with at least one group selected from a hydroxyl group, a carboxyl group, an alkoxy group, an acyloxy group and a alkoxycarbonyl group or
the following formula (1b): 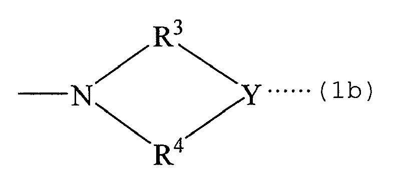 wherein R³ and R⁴ independently represent a single bond, a substituted or unsubstituted methylene or a substituted or unsubstituted divalent alkylene group having from 2 to 7 carbon atoms wherein total of the number of carbon atoms of R³ and R⁴ is from 4 to 10, and Y represents any one of a single bond, O and S and
a repeating unit (B) represented by the following formula (2): 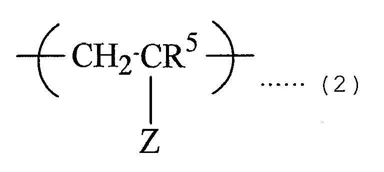 wherein R⁵ represents a hydrogen atom or a methyl group and Z represents an organic group containing at least one aldo group or keto group; and
a hydrazide compound (H) comprising at least two hydrazino groups per one molecule.

In the coating agent for preventing nonspecific adsorption described above, the water-soluble copolymer (P) can further comprise a repeating unit (c) represented by the following formula (3): 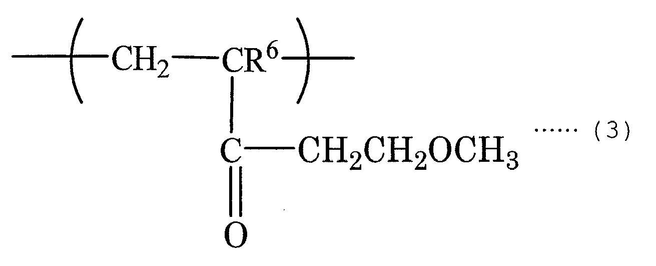 wherein R⁶ represents a hydrogen atom or a methyl group.

The following will specifically describe a coating agent for preventing nonspecific adsorption according to one embodiment of the present invention.

### 1. Water-soluble copolymer (P)

### 1.1. Physical properties and construction of water-soluble copolymer (P)

Weight average molecular weight of the water-soluble copolymer (P) contained in the nonspecific adsorption preventive coating agent concerned in the present embodiment is generally from 1,000 to 1,000,000, preferably from 2,000 to 100,000, more preferably from 3,000 to 50,000. Also, regarding molecular weight distribution of the water-soluble copolymer (P), typically, weight average molecular weight/number average molecular weight is from 1.5 to 3. When weight average molecular weight of the water-soluble copolymer (P) is less than 1,000, the nonspecific adsorption protective effect becomes insufficient in some cases. On the other hand, when weight average molecular weight of the water-soluble copolymer (P) is larger than 1,000,000 on the other hand, the coating becomes difficult to carry out in some cases due to increased viscosity of the solution.

The water-soluble copolymer (P) is water-soluble. According to the present invention, the term "is water-soluble" means that when the copolymer is added to and mixed with water to a polymer solid content of 1% at 25°C, it dissolves to be transparent or translucent state judged with the naked eye.

### 1.1.1. Repeating unit (A)

In the water-soluble copolymer (P), the repeating unit (A) represented by the above-mentioned formula (1) contributes to the expression of high nonspecific adsorption preventive effect and solubility of the water-soluble copolymer (P) in water.

In the above-mentioned formula (1a), it is preferable that R¹ is at least one species selected from a hydrogen atom, a methyl group and an ethyl group, and R² is at least one species selected from a hydrogen atom, a methyl group, an ethyl group, a normal propyl group, an isopropyl group, a methoxyethyl group, and a hydroxyethyl group. From the viewpoint of the ability to produce excellent nonspecific adsorption preventive effect and suitable solubility in water, most preferable combination of R¹ and R² is that both of them are methyl groups.

In the above-mentioned formula (1b), it is preferable that R³ and R⁴ are a methylene group, an ethylene group or a propylene group, and Y is a single bond or oxygen. From the viewpoint of the ability to produce excellent nonspecific adsorption preventive effect and suitable solubility in water, most preferable combination is that both of R³ and R⁴ are ethylene groups and Y is oxygen.

### 1.1.2. Repeating unit (B)

In the water-soluble copolymer (P), the repeating unit (B) represented by the above-mentioned formula (2) contributes to the durability of the coat layer.

In the above-mentioned formula (2), it is preferable that R⁵ is a hydrogen atom. It is preferable that Z is a formyl group, a formylphenyl group, an ester group containing an aldo group represented by the following formula (4): 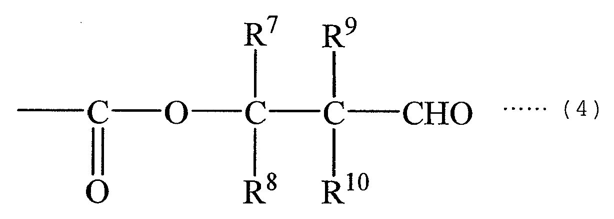 wherein R⁷ to R¹⁰ are independently a hydrogen atom, a methyl group or an ethyl group;
an organic group having an aldo group such as an amido group containing the aldo group represented by the following formula (5): 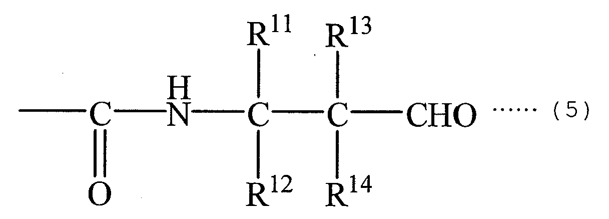 wherein R¹¹ to R¹⁴ are independently a hydrogen atom, a methyl group or an ethyl group;
acetyl group, acetylphenyl group, an ester group containing a keto group represented by the following formula (6): 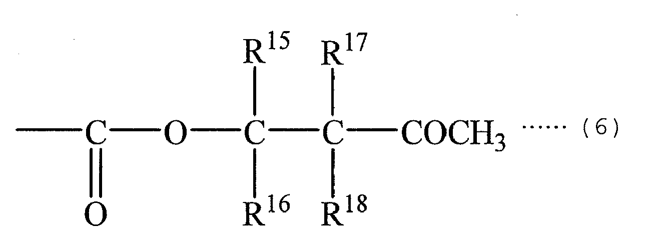 wherein R¹⁵ to R¹⁸ are independently a hydrogen atom, a methyl group or an ethyl group; or an organic group having a keto group such as an amido group containing the keto group represented by the following formula (7): 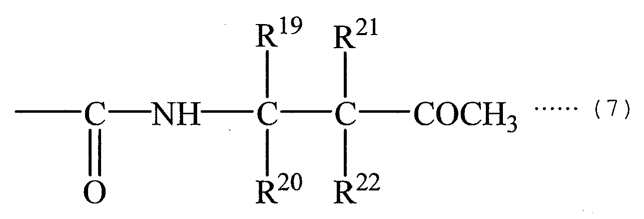 wherein R¹⁹ to R²² are independently a hydrogen atom, a methyl group or an ethyl group.

More preferable organic group as Z are a formyl group, an acetyl group and an organic group represented by the following formula (8), and most preferable organic group is an organic group represented by the following formula (8):

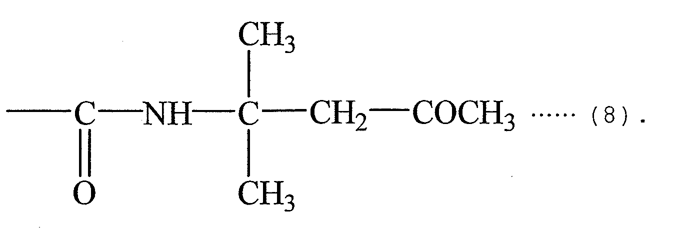

### 1.1.3. Repeating unit (C)

The water-soluble copolymer (P) may further contain a repeating unit (C) represented by the following formula (3): 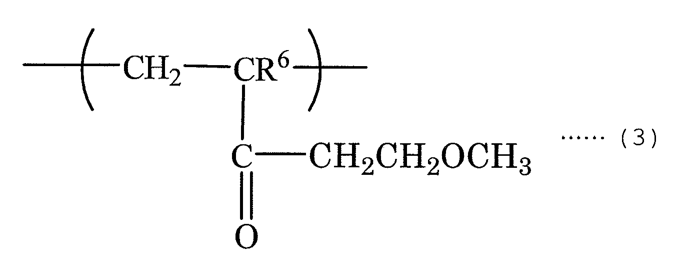 wherein R⁶ represents a hydrogen atom or a methyl group.

In the water-soluble copolymer (P), the repeating unit (C) represented by the above-mentioned formula (3) contributes to the expression of high nonspecific adsorption preventive effect and adsorption of the coat layer to the base material.

In the above-formula (3), it is preferable that R⁶ is a hydrogen atom.

### 1.1.4. Repeating unit (D)

The water-soluble copolymer (P) may contain a repeating unit (D) other than the repeating units (A) to (C) represented by the above-mentioned formulae (1) to (3), within such a range that it does not spoil the effect of the present invention.

### 1.2. Production of water-soluble copolymer (P)

Next, the monomer composition to be used for producing the water-soluble copolymer (P) is described.

### 1.2.1. Monomer (a)

The repeating unit (A) has a structure derived from at least one species of a monomer (a). It is preferable that the monomer (a) is at least one species of monomer selected from acrylamide and N-substituted monomers of acrylamide. More preferable monomer (a) is at least one species selected from acrylamide, N-hydroxyethylacrylamide, N-ethylacrylamide, N,N-dimethylacrylamide, N-isopropylacrylamide, N,N-diethylacrylamide and acryloylmorpholine, and further preferable monomer (a) is N,N-dimethylacrylamide. Amount of the monomer (a) to be used is preferably from 20 to 99 parts by weight, more preferably from 25 to 98 parts by weight, further preferably from 30 to 95 parts by weight, based on 100 parts by weight of the total monomers for producing the water-soluble copolymer (P). In this case, when weight of the monomer (a) is less than 20 parts by weight based on 100 parts by weight of the total monomers for producing the water-soluble copolymer (P), there is a case in which the film formation becomes poor or a case in which the nonspecific adsorption preventive effect becomes inferior. On the other hand, when it exceeds 99 parts by weight, there is a case in which the durability becomes poor.

### 1.2.2. Monomer (b)

The repeating unit (B) has a structure derived from at least one species of a monomer (b). It is preferable that the monomer (b) is at least one species selected from acrolein, formylstyrene, vinyl methyl ketone, vinyl phenyl ketone, the (meth)acrylate represented by the above-mentioned formulae (4) to (7) and (meth)acrylamides, of which more preferable in view of copolymerizing ability is at least one species selected from acrolein, vinyl methyl ketone and diacetoneacrylamide and most preferable in view of the safety of the monomer is diacetoneacrylamide. Amount of the monomer (b) to be used is preferably from 1 to 80 parts by weight, more preferably from 2 to 75 parts by weight, further preferably from 5 to 70 parts by weight, based on 100 parts by weight of the total monomers for producing the water-soluble copolymer (P). In this case, when weight of the monomer (b) is less than 1 part by weight based on 100 parts by weight of the total monomers for producing the water-soluble copolymer (P), there is a case in which the durability becomes poor. On the other hand, when it exceeds 80 parts by weight, there is a case in which the film formation becomes poor or a case in which the nonspecific adsorption preventive effect becomes inferior.

### 1.2.3. Monomer (c)

The repeating unit (C) has a structure derived from at least one species of a monomer (c). It is preferable that the monomer (c) is at least one species selected from 2-methoxyethyl acrylate and 2-methoxyethyl methacrylate, of which more preferable is 2-methoxyethyl acrylate. Amount of the monomer (c) to be used is preferably from 2 to 50 parts by weight, more preferably from 20 to 48 parts by weight, further preferably from 30 to 45 parts by weight, based on 100 parts by weight of the total monomers for producing the water-soluble copolymer (P). In this case, when weight part of the monomer (c) is within the above-mentioned range, high durability and good film formability can be expected.

In addition to the repeating units (A) to (C), the water-soluble copolymer concerned in the present embodiment may contain a repeating unit (D). The monomer (d) is a component for forming the repeating unit (D). When a copolymer is produced by using an anionic monomer, particularly styrene sulfonate, isoprene 2-acrylamide-2-methylpropane sulfonate or the like, as the other monomer (d) and copolymerizing it with the monomers (a) to (c), high nonspecific adsorption effect is obtained in some cases when it is used as a coating agent of a blood bag and the like. As the other monomer (d), conventionally known monomers such as methyl methacrylate, ethyl acrylate, butyl acrylate, styrene, polyoxyethylene (meth)acryl ester, an N-substituted acrylamide of other than monomer (a) and the like may be used for the purpose of controlling film formability, water resistance, moisture keeping ability and the like.

As the monomer to be used, a monomer which can be obtained as an industrial material can be used in the copolymerization by purifying it or directly as such.

Polymerization of the monomers can be carried out for example by conventionally known polymerization methods such as radical polymerization, anionic polymerization, cationic polymerization and the like, and radical polymerization is preferable because of the easy production.

Additionally, polymerization of the monomers is carried out by stirring and heating them together with conventionally known solvent, initiator, chain transfer agent and the like. The polymerization time is generally from 30 minutes to 24 hours, and the polymerization temperature is generally about from 0 to 120°C.

It is preferable that the water-soluble copolymer (P) after polymerization is purified by reprecipitation, extraction, dialysis and the like.

### 2. Hydrazide compound (H)

The hydrazide compound (H) has at least two hydrazino groups in one molecule. Examples of a hydrazide compound (H) include dicarboxylic acid dihydrazides having from 2 to 10, particularly from 4 to 6, carbon atoms in total such as oxalic acid dihydrazide, malonic acid dihydrazide, succinic acid dihydrazide, glutaric acid dihydrazide, adipic acid dihydrazide, sebacic acid dihydrazide, phthalic acid dihydrazide, isophthalic acid dihydrazide, terephthalic acid dihydrazide, maleic acid dihydrazide, fumaric acid dihydrazide, itaconic acid dihydrazide and the like; hydrazides of trifunctional or more such as citric acid trihydrazide, nitriloacetic acid trihydrazide, cyclohexanetricarboxylic acid trihydrazide, ethylenediaminetetraacetic acid tetrahydrazide and the like; water-soluble dihydrazines such as aliphatic dihydrazines having from 2 to 4 carbon atoms and the like such as ethylene-1,2-dihydrazine, propylene-1,2-dihydrazine, propylene-1,3-dihydrazine, butylene-1,2-dihydrazine, butylene-1,3-dihydrazine, butylene-1,4-dihydrazine, butylene-2,3-dihydrazine and the like, and a compound in which at least a part of hydrazino groups of such a multifunctional hydrazine derivative is blocked by allowing it to react with a carbonyl compound such as acetaldehyde, propionaldehyde, butylaldehyde, acetone, methyl ethyl ketone, diethyl ketone, methyl-n-propyl ketone, methyl-n-butyl ketone, diacetone alcohol or the like, such as adipic acid dihydrazide monoacetonehydrrazone, adipic acid dihydrazide diacetonehydrrazone and the like. Among the hydrazide compounds (H), at least one species selected from adipic acid dihydrazide, sebacic acid dihydrazide, isophthalic acid dihydrazide and adipic acid dihydrazide diacetonehydrrazone is preferable. The hydrazide compound (H) can be used alone or as a mixture of two or more species.

It is preferable that the amount of the hydrazide compound (H) to be used is such an amount that mol equivalent ratio of the total amount of an aldo group and a keto group in the water-soluble copolymer (P) to the hydrazino group of the hydrazide compound (H) becomes a range of from 1:0.1 to 5, preferably from 1:0.5 to 1.5, further preferably from 1:0.7 to 1.2. In this case, when the hydrazino group is less than 0.1 equivalent based on 1 equivalent as the total of aldo group and keto group, durability of the coat layer is lowered in some cases. On the other hand, when it exceeds 5 equivalents on the other hand, the nonspecific adsorption inhibitory effect is lowered in some cases.

Although the hydrazide compound (H) can be blended at an optional step for preparing the coating agent for preventing nonspecific adsorption concerned in this embodiment, in order to keep polymerization stability at the time of producing the water-soluble copolymer (P), it is preferable to blend total amount of the hydrazide compound (H) after production of the water-soluble copolymer (P).

The hydrazide compound (H) has the activity to form a hydrophilic network structure and to form crosslinking of the coat layer, through the reaction of its hydrazino group with the keto group and/or aldo group of the water-soluble copolymer (P) at the drying step after application of the coating agent for preventing nonspecific adsorption concerned in this embodiment. Though this crosslinking reaction generally proceeds at ordinary temperature without using a catalyst, it can be accelerated by adding a water-soluble metal salt or the like catalyst such as zinc sulfate, manganese sulfate, cobalt sulfate or the like, or by carrying out drying with heating.

### 3. Coating agent for preventing nonspecific adsorption

It is preferable that the coating agent for preventing nonspecific adsorption concerned in the present embodiment contains a solvent other than the water-soluble copolymer (P) and hydrazide compound (H). It is preferable that the solvent is water. Solid contents concentration of the coating agent for preventing nonspecific adsorption is preferably from 0.01% to 30%, more preferably from 0.1% to 10%.

The coating agent for preventing nonspecific adsorption concerned in the present embodiment has high nonspecific adsorption preventive effect and durability. The coating agent for preventing nonspecific adsorption can act illustratively as follows.

Namely, according to the coating agent for preventing nonspecific adsorption concerned in the present embodiment, the water-soluble copolymer (P) adheres to the wall surface of a container, tool or the like through the hydrophobic bond of the repeating unit (B), and non-specific adsorption of protein and the like can be prevented by changing the wall surface to hydrophilic nature by the action of the repeating unit (A) (further by the repeating unit (C) when the water-soluble copolymer (P) contains the repeating unit (C)).

Additionally, according to the coating agent for preventing nonspecific adsorption concerned in the present embodiment, a hydrazino group in the hydrazide compound (H) reacts with the keto group and/or aldo group in the repeating unit (B) of the water-soluble copolymer (P) to effect formation of a hydrophilic network structure and to form crosslinking of the coat layer, so that durability of the coat layer can be expressed.

The coating agent for preventing nonspecific adsorption concerned in the present embodiment can be used, for example, by coating it on the surface of parts, containers, tools and the like to be used in clinical diagnoses, biochemical experiments and the like (e.g., diagnostic chemiluminescence immunoassay). The coating can be carried out by a conventionally known method, and for example, spin coating, bar coating, blade coating, curtain coating, spray coating, dip coating and the like are possible. Dip coating is preferable from the viewpoint that coating on a tool having a complex shape can be carried out without damage. After the coating, it is preferable to dry at room temperature or under heating. Preferable heating temperature and time vary depending on the base and the like, but are approximately from 40 to 120°C and from 3 minutes to 24 hours.

The coating agent for preventing nonspecific adsorption concerned in the present embodiment can suitably prevent nonspecific adsorption of various proteins, lipids, nucleic acids and the like by coating on clinical diagnosis parts such as an optical cell, an analyte transferring tube, an analyte tube and the like; a silicon base material typified by MEMS, a biotip such as of a glass base material, plastic base material and the like typified by microfluidics; a biosensor such as of gold vapor deposition base material and the like and the like, and can form a coat layer which shows durability for repeated use.

### 4. Examples and Comparative Examples

Although the following describes the present invention further in detail with reference to examples, the present invention is not limited thereto.

In this connection, in the examples, weight average molecular weight (Mw) was measured by a gel permeation chromatography (GPC) which uses a monodispersion polyethylene glycol as the standard, using TSK gel α-M column manufactured by Tosoh Corp., under analytical conditions of 1 ml/min in flow rate, 0.1 mM sodium chloride aqueous solution/ethanol mixed solvent as the elution solvent and 40°C as the column temperature. The absorbance was measured by Model 680 Micro Plate Reader manufactured by Nippon Bio-Rad Laboratories.

### 4.1. Example 1

### 4.1.1 Synthesis of water-soluble copolymer (P-1)

With 900 g of water, 40 g of dimethylacrylamide as the monomer (a), 20 g of diacetoneacrylamide as the monomer (b), 40 g of methoxyethyl acrylate as the monomer (c) and 0.1 g of mercaptopropionic acid as a chain transfer agent were mixed and put into a separable flask equipped with a stirrer. With bubbling nitrogen into it, temperature of the contents was risen to be 70°C. As an initiator, 4 g of 2,2'-azobis[2-(2-imidazolin-2-yl)propane] dihydrochloride was added thereto, the polymerization was continued for 2 hours. Additionally, the temperature was further increased to be 80°C to carry out 3 hours of aging and then lowered to be room temperature. The thus obtained copolymer solution was purified by a Dialyzer and further diluted with water to obtain 1,800 g of the 5% water-soluble copolymer (P-1) aqueous solution of this example. Weight average molecular weight of the water-soluble copolymer (P-1) by GPC was 27,000.

### 4.1.2. Coating

The above-mentioned 5% water-soluble copolymer (P-1) aqueous solution was further diluted to 1% with water, and then 9 g of adipic acid dihydrazide was added thereto and dissolved therein as the hydrazide compound (H) to obtain a coating agent. A polystyrene 96 well plate (to be referred to as 96 well plate hereinafter) was dipped in this coating agent, pulled up and then washed with ion exchange water. The remaining water was blown off using an air gun. It was dried at 40°C for 3 hours and used as a coated 96 well plate.

### 4.1.3. Measurement of nonspecific adsorption inhibitory effect

The coated 96 well plate was washed three times with water, and was filled with a horseradish peroxidase-labeled mouse IgG antibody ("AP124P" manufactured by Millipore) aqueous solution. It was incubated at room temperature for 30 minutes and washed three times with PBS buffer, and then a color was developed with TMB (3,3',5,5'-tetramethylbenzidine)/hydrogen peroxide aqueous solution/sulfuric acid to measure the absorbance at 450 nm.

### 4.1.4. Measurement of durability

The above-mentioned nonspecific adsorption inhibitory effect was measured by washing the coated 96 well plate 5 times with 2% sodium dodecyl sulfate aqueous solution.

### 4.2. Examples 2 to 4

The same operation as Example 1 was carried out except that the monomers and hydrazide compound (H) were changed to the compositions shown in Table 1.

### 4.3. Comparative Example 1

The same operation as Example 1 was carried out except that the hydrazide compound (H) of Example 1 was not used.

### 4.4. Comparative Examples 2 and 3

The same operation as Example 1 was carried out except that the monomer compositions shown in Table 1 were used. However, when polymerization was carried out by the monomer composition of Comparative Example 3, polymer solids were precipitated during polymerization. Since the stirring becomes difficult to continue, the polymerization was stopped and the result was unevaluated.

### 4.5. Comparative Example 4

Using bovine serum albumin (BSA) instead of the coating agent in Example 1, the absorbance in the case of the use of BSA was measured by the same method described under the "4.1.3. Measurement of nonspecific adsorption inhibitory effect".

### 4.6. Results of the measurement

Results of the measurement of nonspecific adsorption preventive effects in the above Examples and Comparative Examples are shown in Table 1.

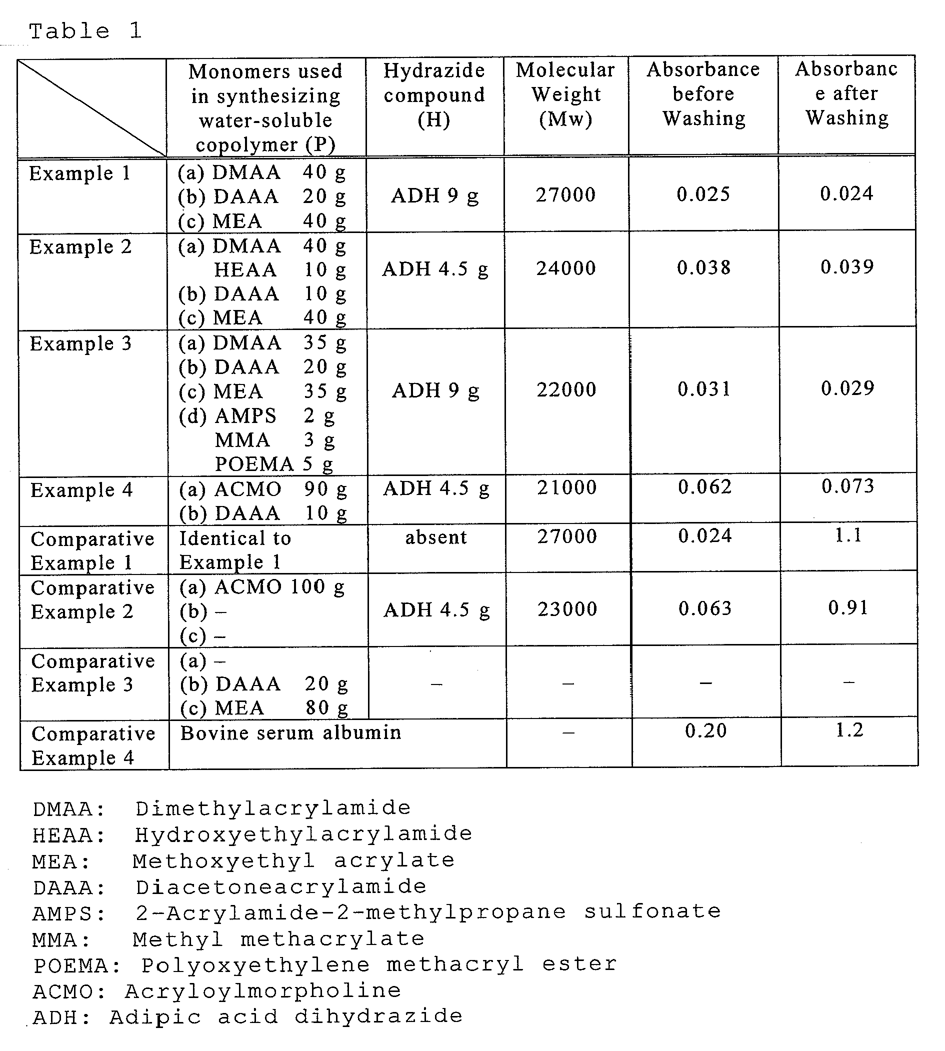

According to Table 1, when the coating agent for preventing nonspecific adsorption concerned in the present embodiment is used, it was confirmed that amount of nonspecific adsorption of mouse IgG antibody to the 96 well plate can be considerably reduced, and also that the formed coat layer is excellent in durability, in comparison with any one of a case in which the hydrazide compound (H) is not used; a case in which it contains a copolymer synthesized without using the monomer (c); and a case in which bovine serum albumin is used.

According to the above-mentioned coating agent for preventing nonspecific adsorption, a coat layer having high nonspecific adsorption preventive effect and durability can be formed by containing a water-soluble copolymer (P) comprising the above-mentioned repeating unit (A), the above-mentioned repeating unit (B) and a hydrazide compound (H).

This patent application is based on Japanese Patent Application No. 2008-61118 filed on March 11, 2008 and the contents thereof are incorporated herein by reference.

A coating agent for preventing nonspecific adsorption of a substance, which comprises a water-soluble copolymer (P) comprising
a repeating unit (A) represented by the following formula (1): 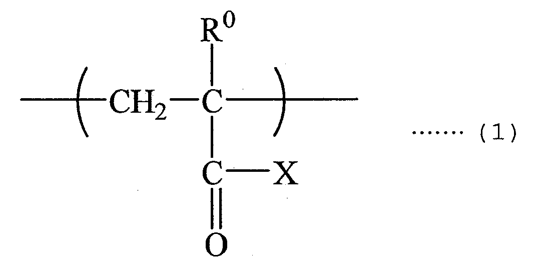 wherein R⁰ represents a hydrogen atom or a methyl group and X represents a group represented by the following formula (1a): 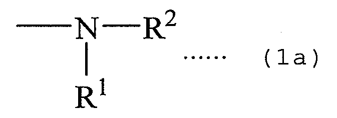 wherein R¹ and R² independently represent a hydrogen atom or unsubstituted or substituted an alkyl group having from 1 to 8 carbon atoms or
formula (1b): 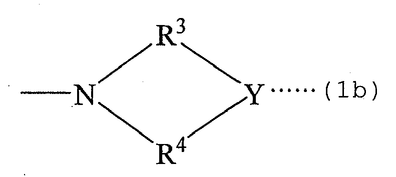 wherein R3 and R⁴ independently represent a single bond, substituted or unsubstituted methylene or substituted or unsubstituted divalent alkylene group having from 2 to 7 carbon atoms wherein total of the number of carbon atoms of R³ and R⁴ is from 4 to 10, and Y represents any one of a single bond, O and S;
a repeating unit (B) represented by the following formula (2): 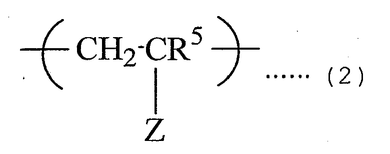 wherein R⁵ represents a hydrogen atom or a methyl group and Z represents an organic group containing at least one aldo group or keto group; and
a hydrazide compound (H) comprising at least two hydrazino groups per one molecule.

## Claims

1. A coating agent for preventing nonspecific adsorption of a substance relating to a living body, which comprises a water-soluble copolymer (P) comprising
a repeating unit (A) represented by the following formula (1): 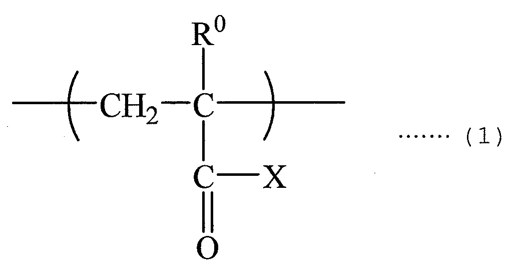 wherein R⁰ represents a hydrogen atom or a methyl group and
X represents a group represented by the following formula (1a): 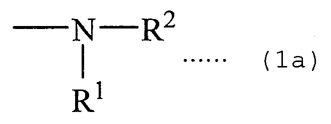 wherein R¹ and R² independently represent a hydrogen atom, an alkyl group having from 1 to 8 carbon atoms or an alkyl group having from 1 to 8 carbon atoms which is substituted with at least one group selected from a hydroxyl group, a carboxyl group, an alkoxy group, an acyloxy group and a alkoxycarbonyl group or
formula (1b): 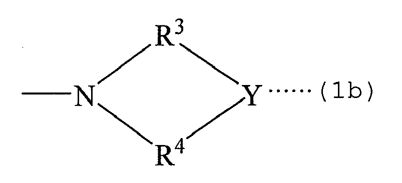 wherein R³ and R⁴ independently represent a single bond, a substituted or unsubstituted methylene or a substituted or unsubstituted divalent alkylene group having from 2 to 7 carbon atoms wherein total of the number of carbon atoms of R³ and R⁴ is from 4 to 10, and Y represents any one of a single bond, O and S and
a repeating unit (B) represented by the following formula (2): 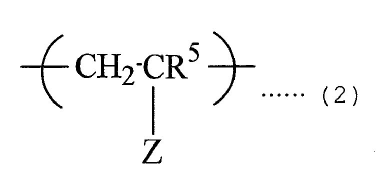 wherein R⁵ represents a hydrogen atom or a methyl group and Z represents an organic group containing at least one aldo group or keto group; and
a hydrazide compound (H) comprising at least two hydrazino groups per one molecule.

2. The coating agent for preventing nonspecific adsorption according to claim 1, wherein the water-soluble copolymer (P) further comprises a repeating unit (C) represented by the following formula (3): 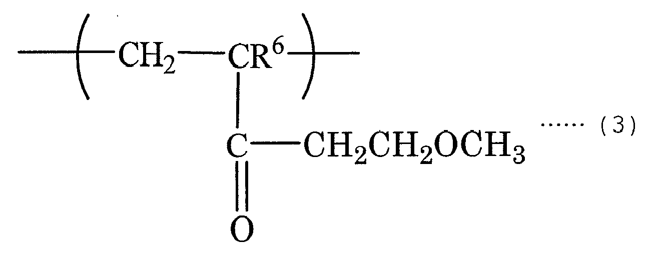 wherein R⁶ represents a hydrogen atom or a methyl group.

3. A method for coating an article, which comprises a step of allowing the article to contact with a solution which comprises the coating agent for preventing nonspecific adsorption of a substance relating to a living body described in claim 1 or 2.
